# EUROPÄISCHE PATENTSCHRIFT

(11) **EP 0 912 361 B1**
(45) Veröffentlichungstag und Bekanntmachung des Hinweises auf die Patenterteilung: **22.03.2000**
(21) Anmeldenummer: 97929318.0
(22) Anmeldetag: 02.07.1997
(51) Int. Cl.: B60K 41/02

(54) **AUTOMATISCH STEUERBARE KUPPLUNG**
AUTOMATIC CLUTCH
EMBRAYAGE A COMMANDE AUTOMATIQUE

(30) Priorität: 17.07.1996 DE 19628787
(43) Veröffentlichungstag der Anmeldung: 06.05.1999
(73) Patentinhaber: DaimlerChrysler AG, 70567 Stuttgart (DE)
(72) Erfinder: KOSIK, Franz, D-73760 Ostfildern (DE); GRASS, Thomas, D-73660 Urbach (DE)
(86) Internationale Anmeldenummer: EP9703484
(87) Internationale Veröffentlichungsnummer: WO9803367

(56) Entgegenhaltungen:
- EP-A- 0 108 315
- GB-A- 2 158 912
- GB-A- 2 280 721

## Beschreibung

Die Erfindung betrifft eine automatisch steuerbare Kupplung zwischen Motor und Antriebsrädern im Antriebstrang eines Kraftfahrzeuges mit willkürlich bzw. manuell zwischen Leerlauf und zumindest einer Fahrstufe schaltbarem Getriebe sowie mit einem Fahrpedal oder dergleichen zur Leistungssteuerung des Motors, mit einer Steuereinrichtung, welche die Kupplung in Abhängigkeit von vorgegebenen, mit zugeordneter Sensorik erfaßten Parametern steuert und bei eingelegter Fahrstufe und unbetätigtem Fahrpedal bewirkt, daß die Kupplung an ihrem Greifpunkt arbeitet und ein geringes, für ein Kriechen des Fahrzeuges auf ebener Fahrbahn bzw. bei sehr geringem Fahrwiderstand ausreichendes Moment überträgt.

Kraftfahrzeuge mit manuell geschalteten Getrieben und automatisch gesteuerter Kupplung sind bekannt und werden serienmäßig hergestellt. Da sowohl die Kupplung als auch das Getriebe bei Normalbetrieb mechanisch, ohne Schlupf arbeiten, kann ein hoher Wirkungsgrad erzielt werden, d.h. entsprechende Systeme sind auch für vergleichsweise leistungsschwache Motoren geeignet. Gleichzeitig wird durch die automatische Kupplung eine deutliche Komfort-Steigerung möglich, insbesondere wenn im Stadtverkehr häufig angehalten und angefahren werden muß. Auch Rangiermanöver werden prinzipiell erleichtert, weil der Fahrer im Gegensatz zu einem Fahrzeug mit willkürlich, beispielsweise durch Pedal, betätigbarer Kupplung nicht ständig mit der Kupplung "spielen" muß.

Um Rangiermanöver zu erleichtern und dem Fahrer ein gutes Gefühl dafür zu geben, wann bzw. in welcher Weise die Kupplung zu greifen beginnt, kann gemäß der GB 2 158 912 A sowie der EP 0 108 315 A1 vorgesehen sein, daß die Kupplung bei eingelegter Fahrstufe und unbetätigtem Fahrpedal bereits ein geringes, für ein Kriechen des Fahrzeuges bei geringem Fahrwiderstand ausreichendes Moment überträgt. Sobald dann der Fahrer das Fahrpedal betätigt, kann die Kupplung in Abhängigkeit vom Drehmoment des Fahrzeugmotors und/oder in Abhängigkeit von dem Drehmoment, welches von einer Welle des Antriebstranges übertragen wird, gesteuert werden.

Aufgabe der Erfindung ist es, bei Fahrzeugen mit Kupplungen der eingangs angegebenen Art das Betriebsverhalten, insbesondere im Hinblick auf Rangiermanöver, zu optimieren.

Diese Aufgabe wird erfindungsgemäß dadurch gelöst, daß die Kupplung nach Erreichen eines angenäherten Gleichlaufes von Kupplungseingang und Kupplungsausgang zumindest bei Betätigung des Fahrpedales geschlossen und bei Betätigung des Fahrpedales vor Erreichen des Gleichlaufes zwischen Kupplungseingang und Kupplungsausgang erst bei leicht erhöhter Drehzahl des Motors zunehmend eingerückt wird.

Die Erfindung sieht vor, auch bei nicht betätigtem Fahrpedal bei eingelegter Fahrstufe ein sehr geringes Drehmoment auf die Antriebsräder zu übertragen, so daß das Fahrzeug eine schwache Neigung zum Kriechen hat. Dies ist ohne weiteres möglich, weil moderne Motoren eine gut stabilisierte Leerlaufdrehzahl aufweisen und das Drehmoment des Motors zur Aufrechterhaltung der Leerlaufdrehzahl weitestgehend verzögerungsfrei automatisch gesteuert wird. Für den Fahrer bietet die ständige Drehmomentübertragung auf die Antriebsräder den Vorteil, daß die Kriechneigung des Fahrzeuges bei Bedarf mit der Betriebsbremse leicht vermindert und durch Betätigung des Fahrpedals ohne weiteres erhöht werden kann. Da die Kupplung ständig mit schwachem Kraftschluß, d.h. an ihrem Greifpunkt arbeitet, braucht der Fahrer diesen Greifpunkt nicht durch Betätigung des Fahrpedals zu "ertasten". Im Ergebnis verhält sich das Fahrzeug ähnlich einem Fahrzeug mit üblicher Getriebeautomatik.

Durch die erfindungsgemäßen Merkmale wird vorteilhaft erreicht, daß nur mit geringem Kupplungsverschleiß gerechnet werden muß. Im Ergebnis kann sogar mit einer Verschleißverminderung gerechnet werden, weil bei vielen Kriechmanövern in kurzer Zeit ein Gleichlauf zwischen Kupplungseingang und Kupplungsausgang auftreten wird und bei einer nunmehr erfolgenden Betätigung des Fahrpedals zur Beschleunigung des Fahrzeuges die Kupplung regelmäßig im geschlossenem Zustand und damit in einem Zustand mit Gleichlauf zwischen Kupplungseingang und Kupplungsausgang gehalten werden kann. Andererseits wird bei Betätigung des Fahrpedales vor Erreichen des Gleichlaufes von Kupplungseingang und -ausgang die Möglichkeit einer besonders starken Beschleunigung des Fahrzeuges geboten, weil in diesem Fall das Schließen der Kupplung erst bei erhöhter Motordrehzahl und erhöhtem Motormoment erfolgt.

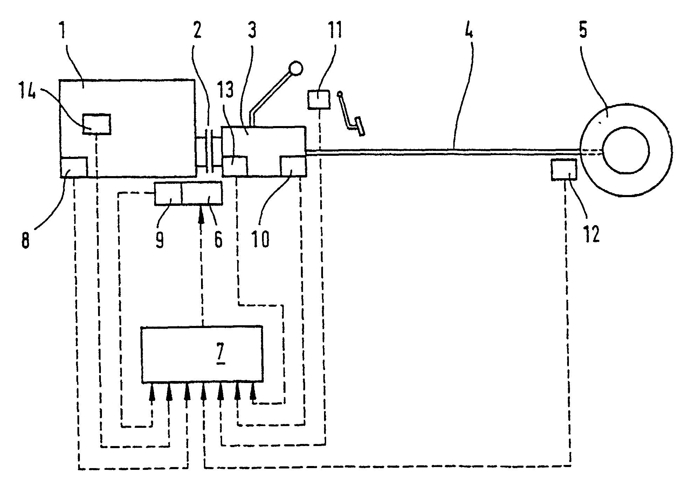

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung beschrieben wird.

Dabei zeigt die einzige Figur eine schematisierte Darstellung des Antriebsstranges eines Kraftfahrzeuges mit erfindungsgemäßer Kupplung.

Bei einem nicht näher dargestellten Kraftfahrzeug ist ein Verbrennungsmotor 1 über eine automatisch gesteuerte Kupplung 2, ein manuell geschaltetes Getriebe 3 sowie eine Antriebswelle 4, z.B. eine Kardanwelle, mit Antriebsrädern 5 des Fahrzeuges antriebsmäßig gekoppelt. Die Betätigung der Kupplung erfolgt mittels eines motorischen Stellaggregates 6, welches von einer rechnergestützten Steuereinrichtung 7 parameterabhängig betätigt wird. Zur Erfassung der Parameter ist die Steuereinrichtung 7 eingangsseitig mit einer entsprechenden Sensorik verbunden. Diese umfaßt einen Sensor 8 für die Drehzahl des Motors, einen Sensor 9 für den Stellweg des Stellaggregates, einen Sensor 10 zur Erfassung der jeweils eingelegten Fahrstufe des Getriebes 3, einen Sensor 11, welcher die Betätigung eines die Leistung des Motors 1 steuernden Fahrpedals wiedergibt, Sensoren 12 für die Drehzahl der Antriebsräder und - gegebenenfalls - einen Sensor 13 für die Drehzahl des Ausgangs der Kupplung 2. Im übrigen kann die Steuereinrichtung 7 auch mit einer Motorsteuerung 14 kommunizieren oder zusammengefaßt sein.

Eine Besonderheit der Erfindung liegt nun darin, daß die Kupplung 2 auf ihren Greifpunkt, d.h. auf einen sehr geringen Kraftschluß, bei dem nur ein sehr geringes Drehmoment übertragen werden kann, eingestellt wird, wenn der Sensor 11 ein nicht betätigtes Fahrpedal signalisiert und der Sensor 10 meldet, daß eine Fahrstufe des Getriebes 3 eingelegt ist. Bei der Einstellung des Greifpunktes können Signale der Motor-Steuerung 14 ausgenutzt werden, welche einerseits bei nicht betätigtem Fahrpedal die Drehzahl des Motors nahe bei dessen Leerlaufdrehzahl stabilisiert und andererseits Signale zu erzeugen vermag, welche das Drehmoment des Motors wiedergeben. Dies beruht darauf, daß die zur Drehzahlstabilisierung notwendigen Steuermaßnahmen der Motorsteuerung 14 das Motordrehmoment verändern und die entsprechenden Steuerbefehle dementsprechend auch eine Information über das Drehmoment des Motors 1 enthalten. Bei konstanter Drehzahl des Motors 1 entspricht das jeweiligen Drehmoment des Motors 1 dem von der Kupplung 2 übertragenen Moment. Im Ergebnis kann also der Greifpunkt der Kupplung 2 ermittelt werden, indem das Stellaggregat 6 und damit die Kupplung 2 so betätigt werden, daß das Drehmoment des Motors 1 und damit das von der Kupplung 2 übertragene Moment einen vorgegebenen geringen Wert haben.

Auf ebener Fahrbahn bzw. bei geringem Fahrwiderstand führt dieses geringe übertragene Drehmoment der Kupplung 2 dazu, daß das Fahrzeug zu kriechen sucht, wobei die Kriechgeschwindigkeit durch Betätigung der Fahrzeugbremse (nicht dargestellt) vermindert werden kann.

Falls das Fahrzeug bei der Kriechbewegung auf ebener, fester Fahrbahn einen hinreichenden Weg ohne Betätigung der Fahrzeugbremse zurücklegt, werden sich die Drehzahlen von Eingang und Ausgang der Kupplung 2 aneinander annähern. Diese Annäherung kann durch Auswertung der Signale der Sensoren 8 und 13 ermittelt werden, die einerseits die Motordrehzahl und damit auch die Drehzahl des mit dem Motor drehfest verbundenen Kupplungseinganges und andererseits die Drehzahl des Kupplungsausganges registrieren.

Gegebenenfalls kann der Sensor 13 erübrigt werden. Beispielsweise kann die Drehzahl des Kupplungsausganges auch aus der von den Sensoren 12 registrierten Drehzahl der Antriebsräder 5 und der vom Sensor 10 gemeldeten eingelegten Getriebestufe, d.h. dem damit vorgegebenen Übersetzungsverhältnis des Getriebes 3, ermittelt werden. Sobald nun bei einer Kriechbewegung des Fahrzeuges ein zumindest angenäherter Gleichlauf von Eingang und Ausgang der Kupplung 2 festgestellt wird, wird die Kupplung 2 bei einer nunmehr erfolgenden Betätigung des Fahrpedals geschlossen gehalten, um einerseits den Verschleiß der Kupplung und andererseits den Kraftstoffverbrauch des Motors 1 zu minimieren. Bei modernen Verbrennungsmotoren ist es regelmäßig möglich, den Motor 1 auch aus sehr niedrigen Drehzahlen unter Last zu beschleunigen. Dies wird bei der erfindungsgemäßen Steuerung der Kupplung 2 ausgenutzt.

Gegebenenfalls kann während der anfänglichen Beschleunigungsphase das übertragbare Drehmoment der Kupplung 2 gegenüber dem vom Motor erzeugten Drehmoment geringfügig abgesenkt werden, etwa dann, wenn sich die Drehzahl des Motors 1 trotz stärkerer Betätigung des Fahrpedals nicht oder nur geringfügig erhöht. Auf diese Weise wird erreicht, daß die Drehzahl des Motors schnell in Bereiche ansteigen kann, in denen das erzeugbare Drehmoment des Motors 1 einen besonders hohen Wert hat.

Falls das Fahrpedal betätigt wird, bevor sich ein angenäherter Gleichlauf des Einganges und Ausganges der Kupplung 2 eingestellt hat, wird die Kupplung erst nach einer vorgegebenen Erhöhung der Drehzahl des Motors 1 zunehmend eingerückt bzw. geschlossen.

## Patentansprüche

1. Automatisch steuerbare Kupplung (2) zwischen Motor (1) und Antriebsrädern (5) im Antriebstrang (2,3,4,5) eines Kraftfahrzeuges mit willkürlich bzw. manuell zwischen Leerlauf und zumindest einer Fahrstufe schaltbarem Getriebe (3) und einem Fahrpedal oder dergleichen zur Leistungssteuerung des Motors (1), mit einer Steuereinrichtung (7), welche die Kupplung (2) in Abhängigkeit von vorgegebenen, mit zugeordneter Sensorik (8 bis 14) erfaßten Parametern steuert und bei eingelegter Fahrstufe und unbetätigtem Fahrpedal bewirkt, daß die Kupplung an ihrem Greifpunkt arbeitet und ein geringes, für ein Kriechen des Fahrzeuges auf ebener Fahrbahn bzw. bei sehr geringem Fahrwiderstand ausreichendes Moment überträgt,
**dadurch gekennzeichnet,**
daß die Kupplung (2) nach Erreichen eines angenäherten Gleichlaufes von Kupplungseingang und Kupplungsausgang zumindest bei Betätigung des Fahrpedales geschlossen und bei Betätigung des Fahrpedales vor Erreichen des Gleichlaufes zwischen Kupplungseingang und Kupplungsausgang erst bei leicht erhöhter Drehzahl des Motors (1) zunehmend eingerückt wird.

2. Kupplung nach Anspruch 1,
**dadurch gekennzeichnet,**
daß das übertragbare Drehmoment der Kupplung (2) gegenüber dem Drehmoment des Motors (1) geringfügig abgesenkt wird, wenn sich die Drehzahl des Motors trotz stärkerer Betätigung des Fahrpedals nicht oder nur geringfügig erhöht.

3. Kupplung nach Anspruch 1 oder 2,
**dadurch gekennzeichnet,**
daß die Kupplung (2) bei unbetätigtem Fahrpedal und eingelegter Fahrstufe zumindest vor Erreichen des Gleichlaufes von Kupplungseingang und Kupplungsausgang auf ein übertragbares Drehmoment eingestellt wird, welches etwas geringer ist als ein vom Motor (1) bei unbetätigtem Fahrpedal und entsprechend geringer Motordrehzahl erreichbares Motormoment.

4. Kupplung nach einem der Ansprüche 1 bis 3,
**dadurch gekennzeichnet,**
daß die Kupplung (2) zunehmend öffnet, sobald die Motordrehzahl einen geringen Schwellwert unterschreitet.

## Claims

1. Automatically controllable clutch (2) between the engine (1) and the drive wheels (5) in the drive train (2, 3, 4, 5) of a motor vehicle with a transmission (3) that can be shifted at will or manually between idling and at least one drive gear and an accelerator pedal or suchlike to control the power of the engine (1), with a control device (7) which controls the clutch (2) as a function of predetermined parameters detected by an associated sensor system (8 to 14) and which, when a gear is engaged and the accelerator pedal is not actuated, ensures that the clutch operates at its "bite" point and transmits a small torque sufficient to make the vehicle creep on a flat road or against very low driving resistance,
**characterised in that**
when approximate synchronisation has been reached between the clutch input and the clutch output, the clutch (2) is closed at least when the accelerator pedal is actuated, and if the accelerator pedal is actuated before synchronisation between the clutch input and clutch output has been reached, the clutch is only progressively engaged when the speed of the engine (1) is slightly elevated.

2. Clutch according to Claim 1,
**characterised in that**
the torque transmitted by the clutch (2) is slightly lower than the torque of the engine (1), when the engine speed is not increased or is only slightly so even when the accelerator pedal has been depressed quite hard.

3. Clutch according to Claims 1 or 2,
**characterised in that**
when the accelerator pedal is not actuated and a gear is engaged, at least before synchronisation is reached between the clutch input and output, the clutch (2) is set to transmit a torque slightly lower than an engine torque attainable by the engine (1) when the accelerator pedal is not actuated and the engine speed is correspondingly low.

4. Clutch according to any of Claims 1 to 3,
**characterised in that**
the clutch (2) progressively disengages as soon as the engine speed falls below a low threshold value.

## Revendications

1. Embrayage (2) à commande automatique disposé entre le moteur (1) et les roues motrices (5) dans la chaîne cinématique (2, 3, 4, 5) d'un véhicule automobile comprenant une boîte de vitesses (3) qu'on peut faire passer de façon aléatoire ou manuellement entre un point mort et au moins une vitesse et une pédale d'accélération ou un dispositif analogue pour commander la puissance du moteur (1), avec un dispositif de commande (7) qui commande l'embrayage (2) en fonction de paramètres prédéterminés, détectés par un système coordonné de capteurs (8 à 14) et fait en sorte, quand une vitesse est engagée et la pédale d'accélération n'est pas actionnée, que l'embrayage travaille à son point d'accrochage ou de début d'embrayage et transmette un faible couple suffisant pour animer le véhicule d'une vitesse rampante sur une chaussée plane ou lorsque la résistance à la marche est très faible,
caractérisé en ce que,
après qu'un synchronisme approximatif entre l'entrée et la sortie de l'embrayage a été atteint, l'embrayage (2) est embrayé au moins à l'actionnement de la pédale d'accélération et, au cas où la pédale d'accélération est actionnée avant que le synchronisme entre l'entrée et la sortie de l'embrayage ne soit atteint, l'embrayage (2) est seulement embrayé de plus en plus lorsque la vitesse de rotation du moteur (1) est légèrement augmentée.

2. Embrayage selon la revendication 1, caractérisé en ce que le couple transmissible par l'embrayage (2) est légèrement abaissé, par rapport au couple du moteur (1), lorsque la vitesse de rotation du moteur n'augmente pas ou augmente seulement dans une faible mesure malgré un actionnement relativement important de la pédale d'accélération.

3. Embrayage selon la revendication 1 ou 2, caractérisé en ce que, lorsque la pédale d'accélération n'est pas actionnée et une vitesse est engagée, l'embrayage (2) est réglée, au moins avant que le synchronisme entre l'entrée et la sortie de l'embrayage ne soit atteint, à un couple transmissible qui est un peu plus faible qu'un couple moteur pouvant être atteint par le moteur (1) lorsque la pédale d'accélération n'est pas actionnée et la vitesse de rotation du moteur présente une faible valeur correspondante.

4. Embrayage selon une des revendications 1 à 3, caractérisé en ce que l'embrayage (2) débraie de plus en plus dès que la vitesse de rotation du moteur descend au-dessous d'une faible valeur de seuil.
